# EUROPEAN PATENT APPLICATION

(11) **EP 4 481 839 A1**
(43) Date of publication of application: **25.12.2024**
(21) Application number: 23180749.6
(22) Date of filing: 21.06.2023
(51) Int. Cl.: H01M 4/04, H01M 4/137, H01M 4/1399, H01M 4/485, H01M 4/52, H01M 4/58, H01M 4/60, H01M 4/62, H01M 4/66, H01M 4/02, H01M 4/131, H01M 4/133, H01M 10/052

(54) **CATHODE COMPRISING AN ELECTRONICALLY CONDUCTIVE REDOX POLYMER, AND METHOD TO PRODUCE SUCH A CATHODE**

(71) Applicant: Belenos Clean Power Holding AG, 2502 Bienne (CH)
(72) Inventor: BUSCHOR, Stephan, 5620 Bremgarten (CH)
(74) Representative: ICB SA

(57) **Abstract**

The present invention relates to a method for producing a cathode (1) for a battery cell, comprising: pre-treating a cathode active material (4) with a first covalent linker; reacting the pre-treated active material with a monomer in the presence of a solvent, thereby obtaining a cathode mixture; pre-treating a cathode current collector (2) with a second covalent linker; applying the cathode mixture to the pre-treated cathode current collector; heating the pre-treated cathode current to a temperature between 50 °C and 150 °C to remove the solvent and polymerize the monomer into an electronically conductive redox polymer (5), thereby obtaining the cathode (1); wherein the polymer (5) is covalently bonded to the cathode active material (4) and to the cathode current collector (2) through the first (6) and the second (7) covalent linker, respectively. The present invention further relates to a cathode (1) comprising a coated cathode current collector (2) and to a battery cell comprising the cathode (1).

## Description

### Technical field of the invention

The present invention relates to a method for producing a cathode comprising an electronically conductive redox polymer and an active material. The invention further relates to such a cathode, for example obtained by the foregoing method, and to a battery cell comprising the cathode.

### Background

Commercially available cathodes for battery cells and batteries, in particular for secondary batteries, typically comprise an active material, a carbon-based material and one or more binders to keep the active material and the carbon-based material together. This mixture or slurry is applied to a cathode current collector, typically an aluminium foil. The active material ensures the ionic conductivity, whereas the carbon-based material acts as electron transmitter.

One of the difficulties encountered with this type of cathode is that the timing between the production of the mixture or slurry and the application thereof to the cathode current collector is critical. A too thick layer of the mixture, i.e. a too thick coating, tends to crack. Another difficulty is that the adhesion between the coating (slurry) and the cathode current collector is often poor, even despite the use of primers, e.g. silanization, to improve the adhesion.

A further disadvantage is that the cathode material is only stable in a certain potential range (2 - 3 plateaus). Deep discharges can lead to charge losses due to irreversible restructuring of the active material.

There is thus a need for improved cathodes. There is in particular a need for improved coatings for the cathode current collector, in particular with regards to the adhesion thereof to the cathode current collector.

Redox polymers have recently gained interest for use as active material for cathodes. Several redox polymers show good, sometimes excellent, conductivity in their oxidized form. Further, their oxidation and reduction is reversible, allowing for charging and discharging of a battery cell. An advantages of organic redox polymer cathodes over the conventional ones based on inorganic transition metals is their environmental friendliness, since the organic redox system is biodegradable.

WO 2018/109150 discloses an electrode material for a cathode in the form of a colloidal solution of a molecular complex comprising at least one maximally nanoscale redox-active organic oligomer and/or polymer and at least one nanoscale graphitic material, such as graphene oxide, in a weight ratio of redox-active oligomer and/or polymer and graphitic material from 0.5:1 to 20:1. The redox-type organic oligomer and/or polymer, acting as active material, forms a complex with the graphitic material. Binders known in the art are used. The complex is applied to a nanoscale current collector, and several of these compositions can be stacked to obtain a cathode.

A disadvantage of the foregoing electrode material is that the energy density is limited when such a redox polymer is used as active material. Further, redox polymers in their reduced form typically show high resistances. Consequently, their use as active material can be questioned, as such increased resistances are a disadvantage in the discharging of battery cells.

### Summary of the invention

It is an aim of the present invention to overcome one or more of the foregoing drawbacks. It is an aim of the present invention to provide a method of producing a cathode for a battery cell, wherein the cathode has a sufficiently high energy density. It is a further aim to provide a method for producing flexible cathodes. It is also an aim to provide a method for producing cathodes which are mechanically stable.

It is further an aim of the present invention to provide a cathode for a battery cell, wherein the cathode has an excellent energy density. It is yet a further aim to provide flexible cathodes, which are also mechanically stable. It is a further aim to provide a cathode which has an increased lifetime, which allows for repeated charging and discharging of the battery cell in which the cathode is used. It is also an aim of the present invention to provide a battery cell comprising the cathode of the invention, wherein the battery cell can resist more charging/discharging cycles and has an increased lifetime.

In the light of the present disclosure, cathode active material and active material are used interchangeably.

In the light of the present disclosure, cathode current collector and current collector are used interchangeably.

According to a first aspect of the present disclosure, there is disclosed a method of producing a cathode for a battery cell according to the appended claims.

The method comprises a step of pre-treating a cathode active material with a first covalent linker, thereby obtaining a pre-treated active material.

The method further comprises reacting the pre-treated active material with a monomer capable of forming an electronically conductive redox polymer.

Advantageously, the cathode active material is vanadium-based, nickel-based and/or phosphate-based. In other words, the cathode active material can comprise two or more compounds, wherein each of the compounds is vanadium-based, nickel-based or phosphate-based.

Advantageously, the first covalent linker is an organofunctional silane. Advantageously, the first covalent linker is an organofunctional silane according to Formula I: 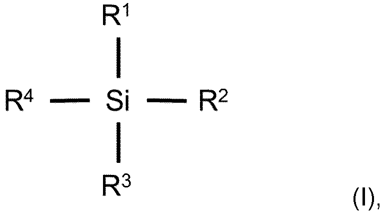 wherein
R¹, R² and R³ are independently C₁₋₆ alkoxy, C₁₋₆ alkoxyalkoxy, C₁₋₆ alkyl, or halogen, wherein at most 2 of R¹, R² and R³ are C₁-₆ alkyl, and
R⁴ is C₂₋₆ alkenyl, C₂₋₆ alkynyl, C₁₋₆ alkyl acrylate, C₁₋₆ alkyl methacrylate, or 3-glycidyloxypropyl.

Advantageously, at least one of R¹, R² and R³ is C₁₋₆ alkoxy or C₁₋₆ alkoxyalkoxy. In other words, the first covalent linker advantageously is an organofunctional alkoxysilane. When one, two or all three of R¹, R² and R³ is/are C₁₋₆ alkoxy or C₁₋₆ alkoxyalkoxy, the first covalent linker is an organofunctional mono-, di-, or tri-alkoxysilane, respectively.

Advantageously, the first covalent linker is capable of forming a covalent bond between the cathode active material and the monomer. Advantageously, the covalent bond through the first covalent linker is a -Si-O- bond.

Advantageously, the first covalent linker binds with the monomer through R⁴, and with the cathode active material through one or more of R¹, R² and R³.

Advantageously, the monomer is 3,4-Ethylenedioxythiophene (EDOT), pyrrole, aniline or acetylene.

Upon reacting the pre-treated active material with the monomer, a cathode mixture is obtained. The cathode mixture comprises the monomer covalently bonded to the cathode active material through the first covalent linker.

Advantageously, the pre-treated active material is reacted with the monomer in the presence of a solvent. In other words, the cathode mixture advantageously comprises a solvent. Advantageously, the solvent comprises or substantially consists of water and/or an alcohol. Non-limiting examples of alcohols include methanol, ethanol, and isopropanol.

The method further comprises pre-treating a cathode current collector with a second covalent linker, thereby obtaining a pre-treated cathode current collector.

The cathode current collector can be any cathode current collector known in the art, for example the cathode current collector can comprise or substantially consist of aluminium.

Advantageously, the second covalent linker is an organofunctional silane. Advantageously, the second covalent linker is an organofunctional silane according to Formula I. The first covalent linker and the second covalent linker can be the same or can be different.

Advantageously, the second covalent linker is capable of forming a covalent bond between the current collector and the monomer. Advantageously, the covalent bond through the second covalent linker is a - Si-O- bond.

Advantageously, the second covalent linker binds with the monomer through R⁴, and with the current collector through one or more of R¹, R² and R³.

The cathode mixture is then applied to at least a portion of a surface of the pre-treated cathode current collector. In other words, at least a portion of a surface of the pre-treated cathode current collector is coated with the cathode mixture. The cathode mixture can be applied by means known in the art.

The pre-treated cathode current collector comprising the cathode mixture is then heated so as to polymerize the monomer into an electronically conductive redox polymer, thereby obtaining the cathode.

The electronically conductive redox polymer is covalently bonded to the cathode active material through the first covalent linker and to the cathode current collector through the second covalent linker.

When the cathode mixture comprises a solvent, the solvent is advantageously removed during heating the pre-treated cathode current collector comprising the cathode mixture.

Advantageously, the heating step is performed at a temperature between 30 °C and 200 °C, preferably between 50 °C and 150 °C, more preferably between 60 °C and 100 °C. In other words, the pre-treated cathode current collector comprising the cathode mixture is heated to a temperature between 30 °C and 200 °C, preferably between 50 °C and 150 °C, more preferably between 60 °C and 100 °C.

Advantageously, the electronically conductive redox polymer comprises one or more of a polythiophene, a polypyrrole, a polyaniline or a polyacethylene.

Preferred examples of the electronically conductive redox polymer include, without being limited thereto, poly(3,4-ethylenedioxythiophene) (PEDOT), PEDOT:polystyrene sulphonate, or the trimer EPE, wherein E is 3,4-ethylenedioxythiophene (EDOT) and P is 3,4-propylenedioxythiophene (ProDOT).

According to a second aspect of the present disclosure, there is disclosed a cathode for a battery cell according to the appended claims.

Advantageously, the cathode is obtained by means of methods according to the first aspect of the present disclosure.

The cathode comprises a cathode current collector, wherein a coating is present on at least a portion of a surface of the cathode current collector. The coating comprises an electronically conductive redox polymer and a cathode active material.

The electronically conductive redox polymer is covalently bonded to the cathode active material. The covalent bond is obtained through a first covalent linker. In other words, the first covalent linker is covalently bonded to the electronically conductive redox polymer and to the cathode active material. Advantageously, the first covalent linker compound is an organofunctional silane. Advantageously, the covalent bond through the first covalent linker is a -Si-O- bond.

The electronically conductive redox polymer is covalently bonded to the cathode current collector. The covalent bond is obtained through a second covalent linker. In other words, the second covalent linker is covalently bonded to the electronically conductive redox polymer and to the cathode current collector. Advantageously, the second covalent linker compound is an organofunctional silane. Advantageously, the covalent bond through the second covalent linker is a -Si-O- bond.

Advantageously, the electronically conductive redox polymer is as described hereinabove.

Advantageously, the cathode active material is as described hereinabove.

According to a third aspect of the present disclosure, there is disclosed a battery cell according to the appended claims.

Advantageously, the battery cell comprises a cathode obtained according to methods of the first aspect of the invention, or a cathode according to the second aspect of the invention.

Advantageously, the battery cell is a secondary battery cell.

Advantageously, the battery cell further comprises an electrolyte and an anode. The electrolyte can be any electrolyte known in the art. The electrolyte can be a liquid electrolyte or a solid electrolyte. The anode can be any anode known in the art. In other words, an advantage of the cathode of the present invention is that it can be used with any electrolyte and any anode known in the art, i.e. it is versatile in its use in battery cells.

Advantageously, the battery cell is a lithium ion battery cell or a lithium metal battery cell.

An advantage of the methods and cathodes of the present invention is that the cathode has a less complex composition, i.e. fewer compounds are required. In particular, no binder and no electronically conductive carbon-based compound are required.

A further advantage is that the cathodes of the invention are mechanically stable, making them robust and resistant against harsh conditions of use and handling.

Yet another advantage is that the cathodes of the invention are flexible, and pliable. This allows the implementation of the cathodes of the invention in, without being limited thereto, flexible batteries.

### Description of the figures

Aspects of the invention will now be described in more detail with reference to the appended drawings, wherein same reference numerals illustrate same features and wherein:
- Figure 1 schematically shows a cathode of the present invention;
- Figure 2 shows the cell potential as a function of the specific charge per gram of active material for a battery cell comprising a cathode obtained by the methods of the present invention, for both charging and discharging of the battery cell.

### Detailed description of the invention

Advantageously, the first and second covalent linker are independently of one another organofunctional silanes according to Formula 1: 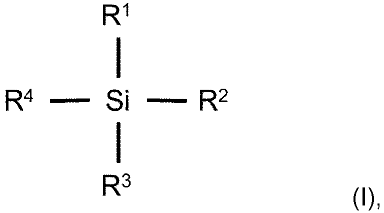 wherein
R¹, R² and R³ are independently C₁₋₆ alkoxy, C₁₋₆ alkoxyalkoxy, C₁₋₆ alkyl, or halogen, wherein at most 2 of R¹, R² and R³ are C₁₋₆ alkyl, and
R⁴ is C₂₋₆ alkenyl, C₂₋₆ alkynyl, C₁₋₆ alkyl acrylate, C₁₋₆ alkyl methacrylate, or 3-glycidyloxypropyl.

When one or more of R¹, R² and R³ are C₁₋₆ alkoxy, they are preferably and independently of one another C₁₋₃ alkoxy, more preferably C₁₋₂ alkoxy, i.e. methoxy (-OCH₃) or ethoxy (-OC₂H₅).

When one or at most two of R¹, R² and R³ are C₁₋₆ alkyl, they are preferably and independently of one another C₁₋₃ alkyl, more preferably C₁₋₂ alkyl, i.e. methyl (-CH₃) or ethyl (-C₂H₅).

When one or more of R¹, R² and R³ are C₁₋₆ alkoxyalkoxy, they are preferably and independently of one another 2-methoxyethoxy (-OCH₂CH₂OCH₃) or methoxyethoxy (-OCH₂OCH₂CH₃).

When one or more of R¹, R² and R³ are halogen, they are preferably and independently of one another fluorine (F), chlorine (Cl), bromine (Br), or iodine (I), more preferably Cl.

When R⁴ is C₂₋₆ alkenyl, R⁴ preferably is C₂₋₄ alkenyl, more preferably C₂₋₃ alkenyl, i.e. vinyl (-CH=CH₂) or allyl (-CH₂CH=CH₂). When R⁴ is C₂₋₆ alkynyl, R⁴ preferably is C₂₋₄ alkynyl, more preferably C₂₋₃ alkynyl, i.e. -C≡CH or -CH₂C≡CH.

When R⁴ is C₁₋₆ alkyl acrylate, R⁴ preferably is C₁₋₄ alkyl acrylate , more preferably C₂₋₃ alkyl acrylate, i.e. ethyl acrylate or propyl acrylate. When R⁴ is C₁₋₆ alkyl methacrylate, R⁴ preferably is C₁₋₄ alkyl methacrylate , more preferably C₂₋₃ alkyl methacrylate, i.e. ethyl methacrylate or propyl methacrylate.

Preferred examples of organofunctional silanes are listed in Table 1.

**Table 1: preferred examples of organofunctional silanes**

| **Name** | **CAS number** | **R¹** | **R²** | **R³** | **R⁴** |
|---|---|---|---|---|---|
| (3-glycidyloxypropyl) trimethoxy silane | 2530-83-8 | -OCH₃ | -OCH₃ | -OCH₃ | 3-glycidyloxypropyl |
| Trimethoxy-(7-octen-1-yl) silane | 52217-57-9 | -OCH₃ | -OCH₃ | -OCH₃ | 7-octen-1-yl |
| Trimethoxyvinyl silane | 2768-02-7 | -OCH₃ | -OCH₃ | -OCH₃ | vinyl |
| Trichlorovinyl silane | 75-94-5 | -Cl | -Cl | -Cl | vinyl |
| Diethoxy-(3-glycidyloxypropyl) methyl silane | 2897-60-1 | -OC₂H₅ | -OC₂H₅ | -CH₃ | 3-glycidyloxypropyl |
| Dimethoxymethylvinyl silane | 16753-62-1 | -OCH₃ | -OCH₃ | -CH₃ | vinyl |
| Triethoxyvinyl silane | 78-08-0 | -OC₂H₅ | -OC₂H₅ | -OC₂H₅ | vinyl |
| (3-glycidyloxypropyl) dimethoxymethyl silane | 65799-47-5 | -OCH₃ | -OCH₃ | -CH₃ | 3-glycidyloxypropyl |
| (Trimethoxysilyl) propyl acrylate | 4369-14-6 | -OCH₃ | -OCH₃ | -OCH₃ | propyl acrylate |
| Allyltrichloro silane | 107-37-9 | -Cl | -Cl | -Cl | allyl |
| Chlorodimethylvinyl silane | 1719-58-0 | -Cl | -CH₃ | -CH₃ | vinyl |
| Tri-(2-methoxyethoxy)vinyl silane | 1067-53-4 | -OC₂H₅OCH₃ | -OC₂H₅OCH₃ | -OC₂H₅OCH₃ | vinyl |

Advantageously, the electronically conductive redox polymer comprises a redox-active group. Non-limiting examples of redox-active groups include quinone, catechol and hydroquinone.

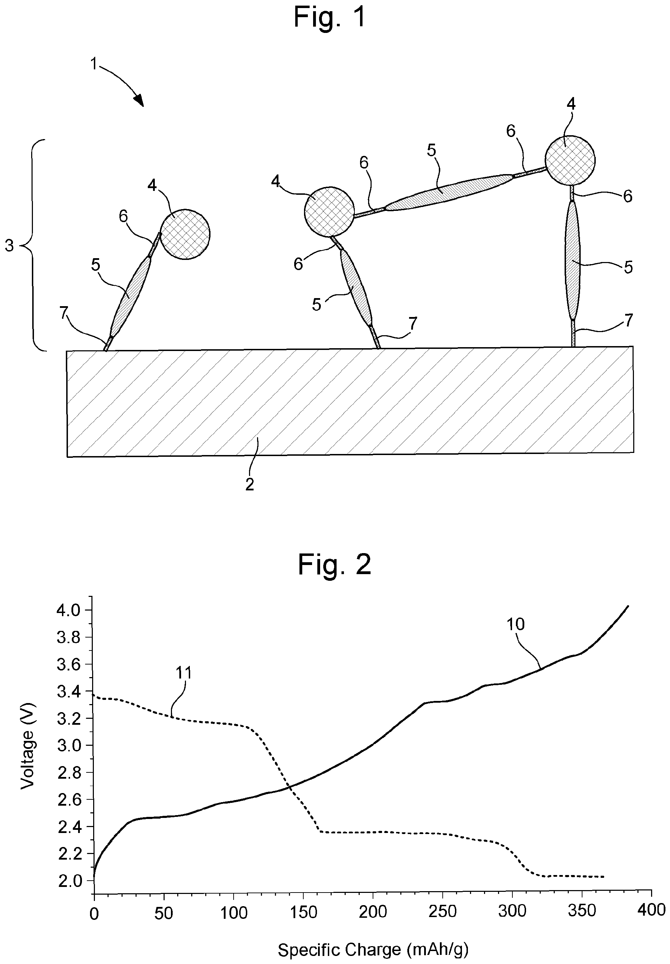

Fig. 1 schematically shows a cathode 1 obtained by methods of the invention. The cathode 1 comprises a current collector 2 and a coating 3 present on a surface of the current collector.

The coating 3 comprises an active material 4, which is advantageously vanadium-based, nickel-based and/or phosphate-based.

Non-limiting examples of vanadium-based active materials include V₂O₅, V₂O₃, VO, H₃V₅O₇, H₂V₃O₈. Optionally, the vanadium-based active material can comprise lithium. Non-limiting examples of lithium-comprising vanadium-based active materials include LiₓV₃O₈, wherein x is between 1 and 4, Li_{y}H_{0.5}V₃O₈, wherein y is between 0.5 and 4.5, and Li_{z}V₂O₅, wherein z is between 0.1 and 4. For example, the active material can comprise two or more vanadium-based compounds, such as a mixture of two or more of V₂O₅, V₂O₃, VO, H₃V₅O₇, and H₂V₃O₈.

Non-limiting examples of nickel-based active materials include lithium nickel cobalt manganese oxide (LiNiCoMnO₂, or NMC), lithium nickel manganese spinel (LiNi_{0.5}Mn_{1.5}O₄, or LNMO), and lithium nickel cobalt aluminium oxide (LiNiCoAlO₂, or NCA).

An examples of a phosphate-based active material is without being limited thereto, lithium iron phosphate (LiFePO₄, or LFP).

The coating 3 also comprises an electronically conductive redox polymer 5. Advantageously, the electronically conductive redox polymer comprises one or more of a polythiophene, a polypyrrole, a polyaniline or a polyacethylene.

The active material 4 is covalently bonded to the electronically conductive redox polymer 5 via first covalent bonds 6. The first covalent bond 6 is realised or obtained via a first covalent linker. The first covalent linker is advantageously as described hereinabove, and for example is a compound of Table 1. In other words, the first covalent linker is covalently bonded to both the active material 4 and the redox polymer 5.

Different molecules of the active material 4 can be bonded to each other via first covalent bonds 6 and the redox polymer 5, thereby forming a three dimensional network, allowing to build up the coating 3, i.e. allowing to obtain a coating 3 having a certain thickness.

The active material 4 is also bonded to the current collector 2. This bond is realised via the redox polymer 5, which is, as described hereinabove, covalently bonded to the active material 4 via a first covalent bond 6. The redox polymer 5 is further covalently bonded to the current collector 2 via a second covalent bond 7. The second covalent bond 7 is realised or obtained via a second covalent linker. The second covalent linker is advantageously as described hereinabove, and for example is a compound of Table 1. In other words, the second covalent linker is covalently bonded to both the cathode current collector 2 and the redox polymer 5.

It is generally known that covalent bonds are much stronger, in the range of several orders of magnitude, than other types of bonds, such as hydrogen bonds. Advantageously, they are also much more stable. Consequently, the covalent bonds 6, 7 provide a strong and stable connection of the active material 4 to the cathode current collector 2.

The inventors have found that this strong and stable connection allows for obtaining or producing cathodes which are mechanically stable. The inventors have found that the cathodes are flexible and pliable, and that they can resist any mechanical work or pressure applied thereto without mechanical damage, such as cracks or fracture, to the cathode.

Further, the covalent bond between the active material 4 and the current collector 2 and the resulting mechanical stability allows for the deposition of thicker coatings. An advantage of thicker coatings is that a higher energy density can be obtained. Another advantage of thicker coatings is that the space in a battery cell can be optimally used.

Advantageously, the coating 2 has a thickness between 10 µm and 200 µm, such as between 20 µm and 175 nm, between 40 µm and 150 µm, preferably between 60 µm and 125 µm, more preferably between 80 µm and 100 µm.

Advantageously, the redox polymer can be repeatedly oxidized and reduced, i.e. the redox polymer undergoes a reversible oxidation and a reversible reduction. Battery cells comprising a cathode of the invention, comprising a redox polymer, can consequently be repeatedly charged (oxidation of the redox polymer) and discharged (reduction of the polymer).

Advantageously, upon reduction of the redox polymer, its electrical resistance increases, thereby becoming more electrically insulating. This allows the protection of the active material through the electrical insulation, i.e. so-called micro-local protection.

Advantageously, the electronically conductive redox polymer has a discharging potential which is higher than the redox potential of the active material but below the usable redox potential window of the active material. Such a discharging potential prevents the battery cell from going into a deep discharge state. It is known that when a battery cell goes into such a deep discharge state, irreversible structural changes of the cathode can take place. This results in an intrinsic safety feature in the battery cell because oxygen evolution from the cathode material can take place and violent reaction with liquid electrolyte might occur, giving rise to fire.

Consequently, battery cells of the invention, comprising a cathode 1 of the invention, are intrinsically safer when compared to classical battery cells having the same electrolyte and anode, but a commercially available cathode.

### Examples

### Example 1: preparation of a cathode of the invention

A 1 vol.% solution of γ-Methacryloxypropyltrimethoxysilane (CAS 2530-85-0) in water was prepared at a pH value between 3.5 and 4.5 (first solution).

The first solution was applied to an aluminium substrate as cathode current collector at an amount of 10 µL/cm², followed by drying for 2 hours at a temperature between 110 °C and 120 °C, thereby obtaining pre-treated aluminium (i.e. pre-treated cathode current collector).

A second solution was prepared by adding 10 g V₂O₅ as active material to 10 mL water. Mixing was performed to obtain a homogeneous second solution. 1.5 mL of the first solution was then added to the second solution. The resulting mixture was then dried for 2 hours at a temperature between 110 °C and 120 °C, thereby obtaining pre-treated V₂O₅ (i.e. pre-treated active material). Then, 10 g of the pre-treated active material was added to 10 mL of water to form a third solution.

A fourth solution was prepared by adding 0.1 g EDOT (2,3-Dihydrothieno[3,4-b]-1,4-dioxin) as monomer, 0.1 g Li p-Toluenesulphonate and 1 g polyethyleneglycol to 10 mL water.

The fourth solution was then added to the third solution, thereby obtaining a fifth solution, which was mixed to obtain a homogeneous mixture. The homogeneously mixed fifth solution was then applied to the pre-treated aluminium, followed by drying at 2 hours at a temperature between 80 °C and 100 °C. During this drying step, the EDOT monomer polymerized into PEDOT polymer.

### Example 2: battery cell comprising cathode of the invention

A battery cell was prepared comprising the cathode of example 1. As anode, a lithium foil on lithium foil was used. The electrolyte was a liquid electrolyte of 2M Lithium bis(fluorosulfonyl)imide (LiFSI) in dimethylether (DME).

The battery cell was charged and discharged at 0.2 mA/cm² and the cell potential (voltage) was measured at room temperature as a function of the specific charge per gram of active material V₂O₅. Figure 2 shows the obtained results for both charging (10) and discharging (11), which are as expected and indicate a very good behaviour of the battery cell, and thus the cathode of the present invention.

### Nomenclature

- 1.: cathode
- 2.: cathode current collector
- 3.: coating
- 4.: cathode active material
- 5.: electronically conductive redox polymer
- 6.: covalent bond through first covalent linker
- 7.: covalent bond through second covalent linker
- 10.: charging profile
- 11.: discharging profile

## Claims

1. Method of producing a cathode (1) for a battery cell, the method comprising the steps of:
- pre-treating a cathode active material (4) with a first covalent linker, thereby obtaining a pre-treated active material,
- reacting the pre-treated active material with a monomer capable of forming an electronically conductive redox polymer (5) in the presence of a solvent, thereby obtaining a cathode mixture comprising the monomer covalently bonded to the cathode active material through the first covalent linker (6),
- pre-treating a cathode current collector (2) with a second covalent linker, thereby obtaining a pre-treated cathode current collector,
- applying the cathode mixture to at least a portion of a surface of the pre-treated cathode current collector,
- heating the pre-treated cathode current collector comprising the cathode mixture to a temperature between 50 °C and 150 °C, thereby removing the solvent, polymerizing the monomer into an electronically conductive redox polymer (5), and obtaining the cathode (1),
**characterized in that** the electronically conductive redox polymer (5) is covalently bonded to the cathode active material (4) through the first covalent linker (6) and to the cathode current collector (2) through the second covalent linker (7).

2. Method according to claim 1, wherein the cathode active material (4) is vanadium-based, nickel-based and/or phosphate-based.

3. Method according to any one of the preceding claims, wherein the solvent comprises water and/or an alcohol.

4. Method according to any one of the preceding claims, wherein the heating is performed at a temperature between 60 °C and 100 °C.

5. Method according to any one of the preceding claims, wherein the electronically conductive redox polymer (5) comprises one or more of a polythiophene, a polypyrrole, a polyaniline or a polyacethylene.

6. Method according to any one of the preceding claims, wherein the electronically conductive redox polymer (5) is poly(3,4-ethylenedioxythiophene) (PEDOT), PEDOT:polystyrene sulphonate, or the trimer EPE, wherein E is 3,4-ethylenedioxythiophene (EDOT) and P is 3,4-propylenedioxythiophene (ProDOT).

7. Method according to any one of the preceding claims, wherein the first and/or the second covalent linker is an organofunctional silane, and wherein the covalent bond through the first covalent linker (6) and/or through the second covalent linker (7) is a -Si-O- bond.

8. Method according to claim 7, wherein the organofunctional silane is an organofunctional alkoxysilane.

9. Cathode (1) for a battery cell comprising a cathode current collector (2), wherein a coating (3) is present on at least a portion of a surface of the cathode current collector (2), wherein the coating (3) comprises an electronically conductive redox polymer (5) and a cathode active material (4), **characterized in that** the electronically conductive redox polymer (5) is covalently bonded to the cathode active material (4) through a first covalent linker (6) and to the cathode current collector (2) through a second covalent linker (7).

10. Cathode according to claim 9, wherein the first and/or the second covalent linker compound is an organofunctional silane, and wherein the covalent bond through the first covalent linker (6) and/or through the second covalent linker (7) is a -Si-O- covalent bond.

11. Cathode according to claim 9 or claim 10, wherein the electronically conductive redox polymer (5) comprises one or more a polythiophene, a polypyrrole, a polyaniline or a polyacethylene.

12. Cathode according to any one of claims 9 to 11, wherein the electronically conductive redox polymer (5) is poly(3,4-ethylenedioxythiophene) (PEDOT), PEDOT:polystyrene sulphonate, or the trimer EPE, wherein E is 3,4-ethylenedioxythiophene (EDOT) and P is 3,4-propylenedioxythiophene (ProDOT).

13. Cathode according to any one of claims 9 to 12, wherein the cathode active material (4) is vanadium-based, nickel-based and/or phosphate-based.

14. Battery cell comprising a cathode (1) obtained according to the method of any one of claims 1 to 8, or comprising a cathode (1) according to any one of claims 9 to 13.

15. Battery cell according to claim 14, wherein the battery cell is a secondary battery cell.
